# FASCICULE DE BREVET EUROPEEN

(11) **EP 0 553 005 B1**
(45) Date de publication et mention de la délivrance du brevet: **27.12.1996**
(21) Numéro de dépôt: 93400088.6
(22) Date de dépôt: 15.01.1993
(51) Int. Cl.: B29C 47/04, B29C 47/10, B44C 3/04

(54) **Plaque de matière synthétique comportant des motifs décoratifs dans la mase et son procédé de fabrication**
Mit Dekorationsmotiven versehene Kunststoffplatte und ihr Herstellungsverfahren
Plastic sheet comprising decorative patterns and its method of manufacturing

(30) Priorité: 24.01.1992 FR 9200790
(43) Date de publication de la demande: 28.07.1993
(73) Titulaire: USIPLAST, F-60530 Neuilly en Thelle (FR)
(72) Inventeur: Mlyncok, Henry, F-60530 Marangles (FR); Heymans, Jean-Jacques, F-60530 Neuilly-en-Thelle (FR)
(74) Mandataire: Giraud, Françoise

(56) Documents cités:
- WO-A-90/06218
- DE-A- 3 334 269
- FR-A- 1 308 573
- FR-A- 2 351 776
- GB-A- 1 111 054
- US-A- 3 148 412
- US-A- 3 310 619
- US-A- 3 892 390
- US-A- 4 836 814
- DATABASE WPIL Week 8741, Derwent Publications Ltd., London, GB; AN 87-286880 & JP-A-62 198 435 (BANDO CHEM IND) 2 Septembre 1987
- CENTRAL PATENTS INDEX, BASIC ABSTRACTS JOURNAL Section Ch, Week 7837, Derwent Publications Ltd., London, GB; Class A, AN 78-66041A & JP-A-53 041 366 (AOIP) AOI PLAS KK) 14 Avril 1978
- CENTRAL PATENTS INDEX, BASIC ABSTRACTS JOURNAL Section Ch, Week 7821, Derwent Publications Ltd., London, GB; Class A, AN 78-37610A

## Description

L'invention concerne une plaque ou feuille de matière synthétique, plus particulièrement une plaque de polypropylène, qui comporte des motifs décoratifs, de préférence répétitifs et ce en masse. L'invention concerne en outre un procédé de fabrication d'une telle plaque.

On connaît déjà des feuilles de matière synthétique (polyéthylène, polypropylène, etc.) qui sont d'une seule teinte en masse et qui sont par ailleurs imprimables. Par exemple, on utilise des plaques de quelques dixièmes de millimètres à quelques millimètres d'épaisseur qui sont en polypropylène pour l'emballage, la publicité, la papeterie. Ces plaques sont fabriquées par la demanderesse, en introduisant dans une trémie mélangeuse les composants : matière synthétique, colorants et additifs en quantités données. Le mélange est ensuite introduit dans une extrudeuse à vis, puis sort à travers une filière plate sous forme de feuille qui passe ensuite entre les cylindres d'une calandre.

Lors de la fabrication d'une telle plaque, on obtient des chutes qui ont diverses couleurs et diverses formes et ce lors du démarrage de la production, du réglage des machines, des bords de laize. Ces plaques sont ensuite découpées chez des transformateurs qui sont alors en possession de chutes inutilisables. On obtient donc de multiples déchets qui grèvent la rentabilité des produits et qui en outre sont difficiles à éliminer en préservant l'environnement.

Un but de l'invention est donc de réutiliser les déchets obtenus lors de la fabrication et/ou la transformation de plaques de matière synthétique.

Un autre but de l'invention est d'éviter le stockage des déchets. En effet, lors de la fabrication, on recycle actuellement ces déchets en les rebroyant et en les réintroduisant dans la trémie. Cependant, ces déchets sont stockés avant réintroduction et consommés lentement.

Encore un but de l'invention est de fabriquer des plaques ayant un aspect esthétique différent des plaques de la technique antérieure, mais ayant des caractéristiques mécaniques voisines, à savoir résistance au choc, rigidité, déchirure, imprimabilité, etc.

L'invention concerne donc une plaque de matière synthétique comportant des motifs décoratifs constitués par des hétérogénéités de teintes en masse, caractérisée par le fait qu'une première série de motifs est constituée de raies non rectilignes et sensiblement parallèles les unes aux autres, disposées sur une face de la plaque et une seconde série de motifs est constituée de raies rectilignes, parallèles les unes aux autres, disposées sur la face opposée de la plaque.

On a décrit dans la technique antérieure des dispositifs et procédés pour obtenir des plaques à effet décoratif. Cependant les dispositifs et procédés décrits ne permettent pas d'obtenir une plaque selon l'invention.

Le document US-A-3 148 412 décrit une vis extrudeuse pour mélanger de façon homogène un matériau thermoplastique avec un pigment.

Le document DE-A-3 334 269, sur lequel reposent le préambule de la revendication 1 et celui de la revendication 5, décrit un procédé et un dispositif pour la fabrication de bandes ayant un aspect marbré. On utilise une extrudeuse de mélange 1 et une extrudeuse de distribution 2. Ces extrudeuses sont reliées par une partie centrale 4. On introduit une granulat en amont de la vis extrudeuse 2. Ce granulat est à température ambiante. Puis en sortie de l'extrudeuse 2 on fait passer la matière entre deux calandres 16 qui écrasent les granulats pour donner un effet marbré à la feuille.

Le document JP-60 015 116 décrit un procédé d'extrusion qui permet d'obtenir un changement de couleur sans perdre de résine. On obtient un mélange homogène.

Le document US-A-3 477 698 décrit un dispositif pour fournir un mélange uniforme à une vis d'injection. On effectue une turbulence cycloïdale de particules de résine.

Le document JP-53 090 372 décrit un procédé de coextrusion. On obtient des raies homogènes et régulières sur une face de la plaque fabriquée. On obtient un dessin de grain naturel et parallèle. La résine colorée est extrudée par un conduit qui comporte des petits trous.

On fabrique ainsi une feuille de plastique qui a des dessins semblables au grain du bois.

Le document JP 53 041 366 décrit un procédé pour fabriquer des poutres synthétiques. On extrude un noyau de mousse thermoplastique et on coextrude coaxialement une couche de résine thermoplastique transparente. On forme un dessin semblable à un grain de bois grâce à une filière qui possède des gravures.

Le document US-A-3 761 552 décrit un procédé pour fabriquer un fil multicolore.

Le document GB-A-617 266 décrit la fabrication d'une feuille plastique ayant un aspect marbré par calandrage.

La plaque selon l'invention est telle que sur une face, les motifs sont constitués d'un fond de couleur sensiblement homogène et de raies de couleur différente du fond. De préférence, les raies sont non rectilignes et sensiblement parallèles les unes aux autres. Sur la face opposée de la plaque, les motifs sont constitués du même fond et de raies rectilignes parallèles mais perpendiculaires aux raies de la face opposée.

La plaque est constituée d'un mélange d'au moins une matière synthétique provenant de déchets obtenus lors de la fabrication et/ou la transformation d'une plaque de matière synthétique de couleur homogène et d'un colorant.

De préférence, la plaque est constituée d'un mélange de deux matières synthétiques colorées ayant un Melt Index compris entre 2 et 20 et d'un colorant adapté pour des matières synthétiques non colorées ayant un Melt Index compris entre 1 et 10.

L'invention concerne en outre un procédé de fabrication de telles feuilles. Le procédé est tel que :
a) on broye des déchets de matière synthétique colorée,
b) on introduit ces déchets dans un récipient,
c) on introduit au moins un colorant dans ledit récipient, le colorant n'étant pas mélangeé avec les déchets dans le récipient, mais étant introduit à la sortie du récipient,
d) on injecte les déchets et le colorant à l'entrée d'une vis d'extrusion,
e) on fait passer le mélange dans une filière pour obtenir une feuille,
f) on fait passer la feuille entre les cylindres d'une calandre, et le colorant étant introduit de façon séquentielle, c'est-à-dire que le colorant n'est pas introduit en continu.

Le procédé selon l'invention est tel que l'on utilise entre la sortie de la vis d'extrusion et la filière, un mélangeur à flux croisé qui a pour fonction d'orienter les flux de matière synthétique et colorant.

Un mélangeur à flux croisé est constitué d'un boîtier tubulaire, d'au moins un élément mélangeur comportant deux ou plus de deux entretoises inclinées par rapport à l'axe longitudinal du boîtier, chaque élément mélangeur présentant des entretoises se croisant avec des entretoises contigües. Un tel mélangeur est décrit par exemple dans le document EP-A-154 013, déposé par Gebrüder SULZER.

Le procédé est encore tel que l'on forme un bourrelet de mélange matière synthétique et colorant entre deux rouleaux de la calandre.

L'invention sera mieux comprise à l'aide des dessins et exemples suivants annexés de façon non limitative.
La figure 1 est une vue schématique du dispositif utilisé pour l'obtention d'une plaque selon l'invention.
La figure 2 est une vue d'une face de la plaque selon l'invention.
La figure 3 est une vue de la face opposée de la plaque selon l'invention.

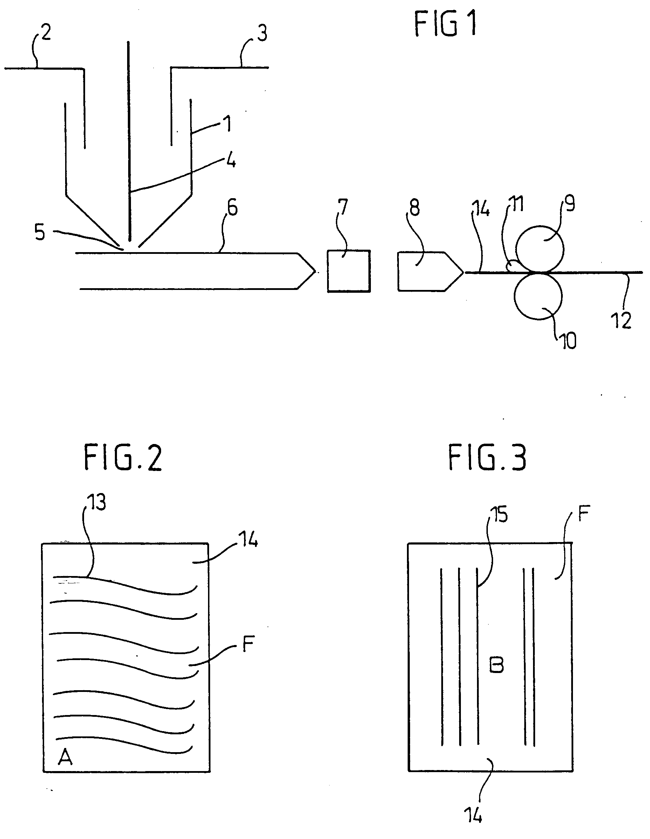

La figure 1 représente un dispositif utilisé pour la fabrication d'une plaque selon l'invention. On introduit dans un récipient 1, par exemple une trémie, un déchet de polypropylène noir par la conduite 2 et un mélange de déchets de polypropylène par la conduite 3. Ce mélange comporte des particules de toutes couleurs provenant du broyage de déchets diversement colorés provenant de chutes de fabrication et/ou de transformation. Les particules de déchets ont par exemple un Melt Index de 2 à 20. On introduit un colorant, plus particulièrement un mélange de polypropylène avec un pigment blanc, appelé "mélange maître". Ce colorant est introduit par la conduite 4, en sortie 5 du récipient 1, située à l'entrée de la vis 6 d'extrusion. Le mélange maître est adapté pour se mélanger de façon homogène avec des matières synthétiques ayant un Melt Index compris entre 1 et 2. Du fait que les particules de déchets sont chauffées à environ 200°C dans la vis, elles se ramollissent et se fondent et sont plus fluides que des particules qui proviennent de matières premières. Le mélange maître colorant se mélange de façon non homogène avec ces déchets lors de l'extrusion.

On fait passer ensuite le mélange coloré de façon non homogène dans un mélangeur à flux croisé 7 qui oriente les différents flux plus ou moins colorés de matière. Le mélangeur a pour résultat de former des raies sombres 15 sur la face B de la feuille F (voir figure 3).

Puis, on fait passer le mélange dans une filière 8 pour former une feuille 14 qui passe entre les cylindres 9, 10 d'une calandre. On forme un bourrelet 11 de matière colorée non homogène en amont des cylindres, ce bourrelet ayant pour résultat de former les zébrures 13 sur la face A de la feuille F (voir figure 2).

On introduit le colorant de façon discontinue pour obtenir une coloration non homogène de la matière.

### Exemple 1

On introduit dans une trémie 50 parties en poids de déchets de polypropylène noir broyés avec 50 parties de déchets de polypropylène de différentes couleurs et on introduit en sortie de la trémie, 2 parties en poids d'un colorant blanc sous forme de mélange maître. On extrude la composition dans une vis extrudeuse, puis on la fait passer dans un mélangeur à flux croisé puis une filière, et enfin, entre les cylindres d'une calandre. On obtient une feuille ayant un fond gris et des zébrures gris clair sur une face, et sur la face opposée des rayures gris foncé sur un fond gris. Les zébrures et les rayures sont dans la masse.

### Exemple 2

On introduit dans une trémie 100 parties en poids de granulés de matière première blanche de polypropylène et 2 parties en poids d'un colorant bleu. On fabrique la feuille selon l'exemple 1. On obtient une feuille ayant un fond bleu clair, sur une face des zébrures bleu foncé, et sur la face opposée des rayures bleu foncé, les rayures et zébrures étant dans la masse.

## Revendications

1. Plaque de matière synthétique comportant des motifs décoratifs constitués par des hétérogénéité de teintes en masse, caractérisée par le fait qu'une première série de motifs est constituée de raies (13) non rectilignes et sensiblement parallèles les unes aux autres, disposées sur une face de la plaque et une seconde série de motifs est constituée de raies (15) rectilignes, parallèles les unes aux autres, disposées sur la face opposée de la plaque.

2. Plaque selon la revendication 1, caractérisée par le fait que les raies de la seconde série de motifs (15) sont perpendiculaires à l'orientation principale des raies de la première série de motifs (13).

3. Plaque selon l'une des revendications 1 et 2, caractérisée par le fait qu'elle est constituée d'un mélange d'au moins une matière synthétique provenant de déchets de fabrication et/ou transformation et d'un colorant.

4. Plaque selon la revendication 3, caractérisée par le fait que les matières synthétiques ont un Melt Index compris entre 2 et 20 et que le colorant est adapté pour des matières synthétiques ayant un Melt Index compris entre 1 et 10.

5. Procédé de fabrication d'une plaque selon les revendications 1 à 4 tel que :
a) on broie des déchets de matière synthétique colorée,
b) on introduit ces déchets dans un récipient (1),
c) on introduit au moins un colorant dans ledit récipient, le colorant n'étant pas mélangé avec les déchets dans le récipient, mais étant introduit à la sortie (5) du récipient,
d) on injecte les déchets et le colorant à l'entrée d'une vis (6) d'extrusion,
e) on fait passer le mélange dans une filière (8) pour obtenir une feuille (14),
f) on fait passer la feuille entre les cylindres (9,10) d'une calandre,
caractérisé par le fait que l'on introduit le colorant de façon séquentielle.

6. Procédé selon la revendication 5, caractérisé par le fait que l'on utilise entre la sortie de la vis (6) d'extrusion et la filière (8), un mélangeur à flux croisé (7) qui a pour fonction d'orienter les flux de matière synthétique et colorant.

7. Procédé selon l'une des revendications 5 et 6, caractérisé par le fait que l'on forme un bourrelet (11) de mélange de matière synthétique et colorant entre deux rouleaux de la calandre.

## Claims

1. Synthetic sheet comprising decorative patterns constituted by heterogeneity of shades in the mass, characterized in that a first series of patterns is constituted by non-rectilinear lines (13) substantially parallel to one another, disposed on one face of the sheet and a second series of patterns is constituted by rectilinear lines (15) parallel to one another, disposed on the opposite face of the sheet.

2. Sheet according to Claim 1, characterized in that the lines of the second series of patterns (15) are perpendicular to the principal orientation of the lines of the first series of patterns (13).

3. Sheet according to one of Claims 1 and 2, characterized in that it is constituted by a mixture of at least one synthetic material coming from manufacturing and/or transformation wastes and from a dye.

4. Sheet according to Claim 3, characterized in that the synthetic materials have a Melt Index included between 2 and 20 and that the dye is adapted for synthetic materials having a Melt Index included between 1 and 10.

5. Method for manufacturing a sheet according to Claims 1 to 4, including:
a) grinding wastes of coloured synthetic material,
b) introducing these wastes in a recipient (1),
c) introducing at least one dye in said recipient, the dye not being mixed with the wastes in the recipient, but being introduced at the outlet (5) of the recipient,
d) injecting the wastes and the dye at the inlet of an extrusion screw (6),
e) passing the mixture in a die (8) to obtain a sheet (14),
f) passing the sheet between the rollers (9, 10) of a calender,
characterized in that the dye is introduced in sequential manner.

6. Method according to Claim 5, characterized in that a cross flow mixer (7) is used between the outlet of the extrusion screw (6) and the die (8), which has for its function to orientate the fluxes of synthetic material and dye.

7. Method according to one of Claims 5 and 6, characterized in that a bead (11) of mixture of synthetic material and dye is formed between two rollers of the calender.

## Patentansprüche

1. Kunstharzplatte, die dekorative Musterungen aufweist, die aus Farb-Heterogenitäten in der Masse bestehen, dadurch gekennzeichnet, daß eine erste Reihe von Mustern aus nicht-geradlinigen Streifen (Strichen) (13) besteht, die im wesentlichen parallel zueinander verlaufen, die auf einer Oberfläche der Platte angeordnet sind, und daß eine zweite Reihe von Mustern aus geradlinigen Streifen (Strichen) (15) besteht, die parallel zueinander verlaufen und auf der gegenüberliegenden Oberfläche der Platte angeordnet sind.

2. Platte nach Anspruch 1, dadurch gekennzeichnet, daß die Streifen (Striche) der zweiten Reihe von Mustern (15) senkrecht zur Hauptorientierung der Streifen (Striche) der ersten Reihe von Mustern (13) verlaufen.

3. Platte nach einem der Ansprüche 1 und 2, dadurch gekennzeichnet, daß sie besteht aus einer Mischung aus mindestens einem Kunststoff, der aus Fabrikations- und/oder Umformungsabfällen stammt, und einem Farbstoff (Färbemittel).

4. Platte nach Anspruch 3, dadurch gekennzeichnet, daß die Kunststoffe einen Schmelzindex zwischen 2 und 20 haben und daß der Farbstoff (das Färbemittel) für Kunststoffe mit einem Schmelzindex zwischen 1 und 10 geeignet ist.

5. Verfahren zur Herstellung einer Platte nach einem der Ansprüche 1 bis 4, bei dem man
a) gefärbte Kunststoff-Abfälle mahlt,
b) diese Abfälle in einen Behälter (1) einführt,
c) mindestens einen Farbstoff (Färbemittel) in den genannten Behälter einführt, wobei der Farbstoff (das Färbemittel) vorher nicht mit den Abfällen in dem Behälter gemischt wird, sondern in den Ausgang (5) des Behälters eingeführt wird,
d) die Abfälle und den Farbstoff (das Färbemittel) in den Eingang einer Extrusionsschnecke (6) injiziert,
e) die Mischung in eine Düse (8) zur Herstellung einer Folie (14) gelangen läßt, und
f) die Folie zwischen den Zylindern (9, 10) eines Kalanders hindurchlaufen läßt,
dadurch gekennzeichnet, daß man den Farbstoff (das Färbemittel) sequentiell (portionsweise) einführt.

6. Verfahren nach Anspruch 5, dadurch gekennzeichnet, daß man zwischen dem Ausgang der Extrusionsschnecke (6) und der Düse (8) einen Kreuzfluß-Mischer (7) verwendet, der die Aufgabe hat, die Kunststoff- und Farbstoff-Ströme auszurichten.

7. Verfahren nach einem der Ansprüche 5 und 6, dadurch gekennzeichnet, daß man einen Wulst (11) aus einer Mischung aus Kunststoff und Farbstoff (Färbemittel) zwischen zwei Kalanderwalzen erzeugt.
